# EUROPÄISCHE PATENTSCHRIFT

(11) **EP 1 098 795 B1**
(45) Veröffentlichungstag und Bekanntmachung des Hinweises auf die Patenterteilung: **05.10.2005**
(21) Anmeldenummer: 00945539.5
(22) Anmeldetag: 19.05.2000
(51) Int. Cl.: B60S 1/38, B60S 1/40

(54) **WISCHBLATT FÜR SCHEIBEN VON KRAFTFAHRZEUGEN**
WIPER BLADE FOR THE GLASS SURFACES OF A MOTOR VEHICLE
ESSUIE-GLACE POUR VITRES DE VEHICULES AUTOMOBILES

(30) Priorität: 28.05.1999 DE 19924661; 13.08.1999 DE 19938400
(43) Veröffentlichungstag der Anmeldung: 16.05.2001
(73) Patentinhaber: ROBERT BOSCH GMBH, 70442 Stuttgart (DE)
(72) Erfinder: DE BLOCK, Peter, B-3545 Halen (BE)
(86) Internationale Anmeldenummer: PCT/DE2000/001618
(87) Internationale Veröffentlichungsnummer: WO 2000/073111

(56) Entgegenhaltungen:
- DE-A- 19 729 865
- US-A- 3 845 519

## Beschreibung

### Stand der Technik

Die bei Wischvorrichtungen für Windschutzscheiben von Kraftfahrzeugen in der Praxis seit langem verbreiteten Tragbügelgestell-Wischblätter (DE-A-15 05 397) weisen eine große Bauhöhe auf, welche bei den vor der Fahrzeugscheibe vorhandenen Strömungsverhältnissen, insbesondere bei höherer Fahrgeschwindigkeit den Abhebebestrebungen des Wischblatts entgegenkommt. Zumindest wird dadurch der vorschriftsmäßige Auflagedruck des Wischblatts an der Scheibe so stark verringert, daß die Wischqualität leidet.

Die Erfindung geht aus von einem sehr niedrig bauenden Wischblatt nach der Gattung der Anspruchs 1. Bei einem bekannten Wischblatt dieser Art (DE-A-19 72 98 65.6) ist an den beiden Längsseiten des Kupplungsteils jeweils ein im Querschnitt unrunder Gelenkzapfen angeordnet wobei beide Gelenkzapfen eine gemeinsame Gelenkachse aufweisen. Die so gebildete wischblattseitige Gelenkhälfte wirkt mit am Wischerarm vorhandenen, die wischerarmseitige Gelenkhälfte bildenden Lagerbohrungen zusammen, die jeweils über einen Einführkanal randoffen sind wobei die Kanalbreite auf den kleineren Zapfendurchmesser abgestimmt ist. Die Gelenkausbildung ist dabei so getroffen, dass während des Wischbetriebs die Gelenkzapfen nicht aus ihren Lagerbohrungen gelangen können. Soll das Wischblatt vom Wischerarm abgenommen werden beispielsweise wenn ein abgenutztes Wischblatt durch ein neues Wischblatt ersetzt werden soll, ist zunächst der Wischerarm von der Scheibe wegzuklappen, damit das Wischblatt in seine Montageposition gebracht werden kann in der die Gelenkzapfen durch die Einführkanäle gebracht und das Wischblatt vom Arm gelöst werden kann. Bei unsachgemäßer Handhabung kann sich jedoch das Wischblatt schon beim Wegklappen des Arms im Gelenk selbständig so verdrehen, dass sich das Blatt unbeabsichtigt vom Wischerarm lösen auf die Fahrzeugkarosserie fallen und dort Schäden verursachen kann.

Mit der US-A-3,845,519 ist ein Wischblatt bekannt geworden, bei dem ein Kupplungsteil für einen Wischerarm an einem aus mehreren bandartig langgestreckten Einzelschienen zusammengesetzten Tragelement sitzt. Das Kupplungsteil weist zwei Seitenbleche auf, die von jeweils einer miteinander korrespondierenden Bohrung für einen Stift des wischerarmseitigen Kupplungsteils durchdrungen sind. Zwischen den Seitenblechen ist eine Rastvorrichtung eingebracht, die in Zusammenbaustellung mit einem Absatz des Stifts zusammenwirken kann. Dieser Aufbau ist zum einen in sich aufwändig, weil sowohl das wischblattseitige Kupplungsteil als auch der Stift stark strukturiert sein muss, und zum anderen wenig montagefreundlich, da der Stift in zwei Bohrungen eingefädelt werden muss. Außerdem leidet die Optik des Wischblatts unter diesem Aufbau.

### Vorteile der Erfindung

Bei dem erfindungsgemäßen Wischblatt mit den kennzeichnenden Merkmalen des Anspruchs 1 ist es möglich, den Wischerarm mit einem im Querschnitt runden Zapfen auszustatten, der in Richtung der Gelenkachse in die Lagerausnehmung eingebracht werden kann. Dadurch ergibt sich eine Kupplungs- und Gelenkvorrichtung, bei welcher der Gelenkbolzen des Wischerarms vollständig von der Lagerausnehmung des Wischblatts umschlossen ist. Das Lösen des Wischblatts vom Wischerarm erfolgt durch Abziehen des Wischblatts vom Lagerbolzen des Wischerarms in Richtung der Gelenkachse, wobei zuvor gegebenenfalls entsprechende Sicherungsmittel gelöst werden müssen. Die erfindungsgemäße Ausbildung der wischblattseitigen Gelenkhälfte und der Kupplungsmittel ist besonders vorteilhaft bei Wischvorrichtungen anzuwenden, bei denen der Wischerarm und das Wischblatt in Wischrichtung gesehen hintereinander angeordnet ist. Die Wischblattausbildung im Bereich des Kupplungsteils ist besonders kostengünstig, was für die Preisgestaltung von Austauschwischblättern von Bedeutung ist. Neben ihren Funktionen als Kupplungsmittel und als Gelenkhälfte bietet sich die Lagerausnehmung auch als eine hervorragende Positionierungshilfe an, wenn das Wischblatt während seiner Fertigung Montage- oder Prüfvorrichtungen durchläuft. Für einen ruhigen Wischbetrieb ist es von wesentlicher Bedeutung, daß das Wischerarm-Kupplungsteil zwei sich in Längsrichtung des Wischblatts erstreckende, zur Scheibe stehend angeordnete Wangenbereiche hat, von denen jeweils ein Wangenbereich an einer der beiden Kupplungsteil-Längsseiten ausgebildet ist wobei weiter der Abstand zwischen den beiden Wangenbereichen zwischen 16 mm und 25 mm beträgt. Ergeben sich einmal definierte Führungs- oder Paßflächen, an denen Gegenflächen des Wischerarms während des Wischbetriebs sauber angelegt werden können, so daß ein gutes Wischergebnis gewährleistet ist. Durch den in Wischrichtung gemessenen Abstandsbereich von 16 mm bis 25 mm wird beim Größtmaß eine Minimierung einer Kippbewegung des Wischblatts um seine Längsachse erreicht, wenn das Wischblatt seine Wischrichtung umkehrt, was bei großem Spiel auch mit einer gewissen, unerwünschten Geräuschbildung verbunden sein kann. Andererseits darf die in Wischrichtung gemessene Breite des Wischblatts aus Gründen des Stylings eine gewisse Größe nicht übersteigen.

In der Praxis hat es sich gezeigt, daß diese Probleme besonders gut gelöst werden, wenn der Abstand zwischen den beiden Wangenbereichen in Wischrichtung gemessen zwischen 20 mm und 23 mm beträgt.

Für eine speziellen Anbindungsfall hat sich ein in Wischrichtung gemessener Abstand zwischen den beiden Wangenbereichen von 22mm als außerordentlich günstig erwiesen.

Insbesondere aus Gründen der Optik ist es besonders vorteilhaft, wenn das Verhältnis zwischen der Länge des Wischblatts und dem Abstand zwischen den beiden Wangenbereichen zwischen den Werten 1:22 und 1:33 liegt.

In Fortbildung des Erfindungsgedankens ist in Längsrichtung des Wischblatts gesehen die Lagerausnehmung nahe dem einen Ende des Kupplungsteils angeordnet, wobei die Dicke des Kupplungsteils zwischen dem einen, mit der Lagerausnehmung versehenen Endbereich und dem anderen Ende des Kupplungsteils zumindest über einen Längsabschnitt geringer ist als der die Lagerausnehmung aufweisende Endabschnitt des Kupplungsteils. Das die Lagerausnehmung aufweisende dickere Ende des Kupplungsteils gewährleistet die nötige Stabilität im Übertragungsbereich der Kraft vom Wischerarm auf das Wischblatt.

Damit das Wischblatt auch in einer von der Scheibe weggeklappten Position gegen unbeabsichtigtes Lösen vom Wischerarm gesichert ist, ist in Längsrichtung des Wischblatts gemessen der Abstand der Querbohrung über die Quernut bis hin zum einen Ende des Wischblatts größer als zum anderen Ende des Wischblatts.

Wenn der die geringere Dicke des Kupplungsteils aufweisende Kupplungsteil-Längsabschnitt durch eine Quernut im Kupplungsteil gebildet ist, welche zu der vom Tragelement abgewandten Seite des Kupplungsteils offen ist. Dieser Längsabschnitt kann als Übergangskanal für Sicherungsmittel des Wischerarms genutzt werden, welche bei in Wischrichtung neben dem Wischerarm angeordnetem Wischblatt an der vom Wischerarm abgewandten Seite des Wischblatts wirksam sind ohne daß deshalb die niedrige Bauhöhe des Wischblatts ungünstig beeinflußt wird.

Als besonders vorteilhaft hat es sich erwiesen, wenn der eine der beiden Wangenbereiche die Mündung der Lagerausnehmung umgibt und der andere Wangenbereich an dem Abschnitt des Kupplungsteils angeordnet ist, welcher eine geringere Dicke hat als der mit der Lagerausnehmung versehene Endbereich des Kupplungsteils. Es ergibt sich somit in Längsrichtung des Wischblatts gesehen ein Abstand zwischen den beiden Paßflächen, was sich hinsichtlich der Wischblattführung während des Wischbetriebs als besonders vorteilhaft erwiesen hat.

Wenn die Lagerausnehmung als Sackbohrung ausgebildet ist kann die Verschmutzung dieser hoch beanspruchten Lagerstelle erheblich verringert werden.

Wenn die schon erwähnten Sicherungsmittel des Wischblatts auf die gewählte Breite der Nut von 8 mm bis 10 mm, vorzugsweise von 9 mm abgestimmt werden ergibt sich für das Wischblatt während des Wischbetriebs eine weitere Verbesserung der Stabilität sowie eine Entlastung der Lagerstelle, wenn sich die Sicherungsmittel an den einander zugewandten Nutwänden abstützen.

Damit eine am Wischblatt anzuordnende Windabweisfläche auch im Bereich des Kupplungsteils fortgeführt wird, ist wenigstens eine der beiden Kupplungsteil-Längsseiten über einen Abschnitt mit einer Anschrägung versehen. Werden beide Kupplungsteil-Längsseiten mit einer solchen Anschrägung versehen kann sich darüberhinaus noch eine Vereinfachung für die Montage des Wischblatts am Wischerarm erreicht werden.

Vorteile hinsichtlich der Herstellungskosten für das Wischblatt ergeben sich, wenn das Kupplungsteil aus einem Kunststoff hergestellt ist.

Dabei kann es von Vorteil sein, die Lagerausnehmung im Kupplungsteil durch die Bohrung einer im Kupplungsteil sitzenden Führungsbuchse kann eine günstige Gleitpartnerkombination mit dem Material für den Gelenkbolzen erreicht werden.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

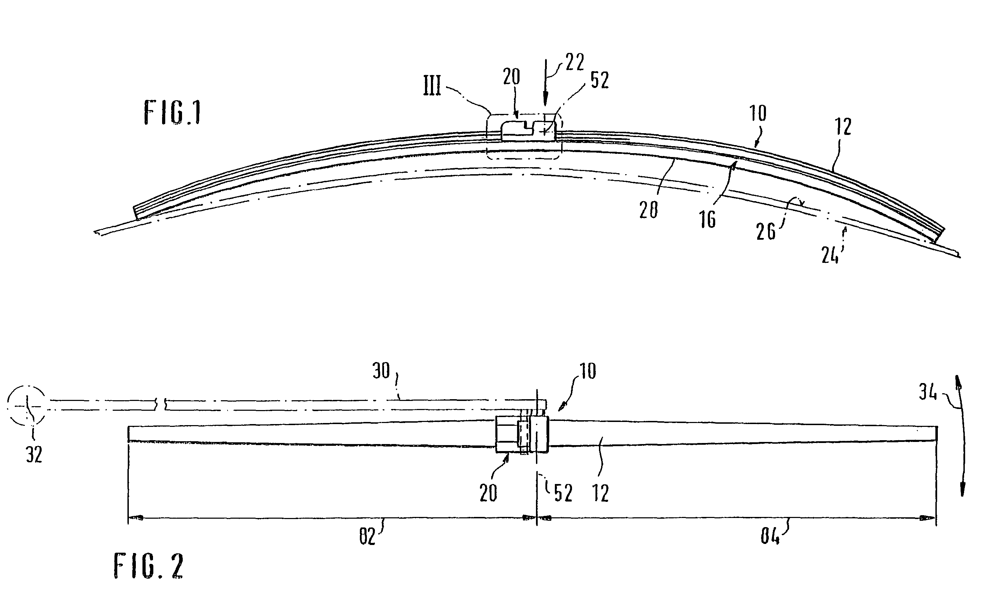

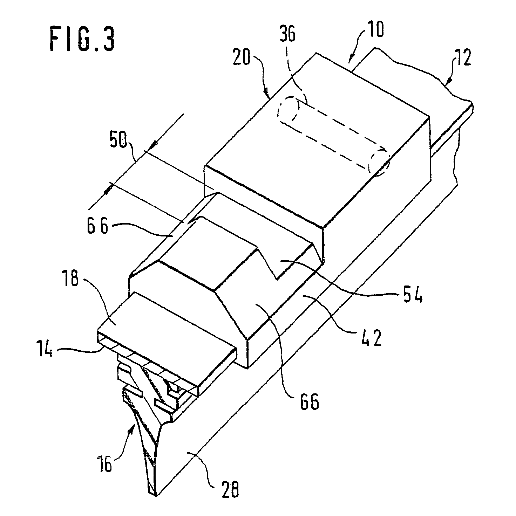

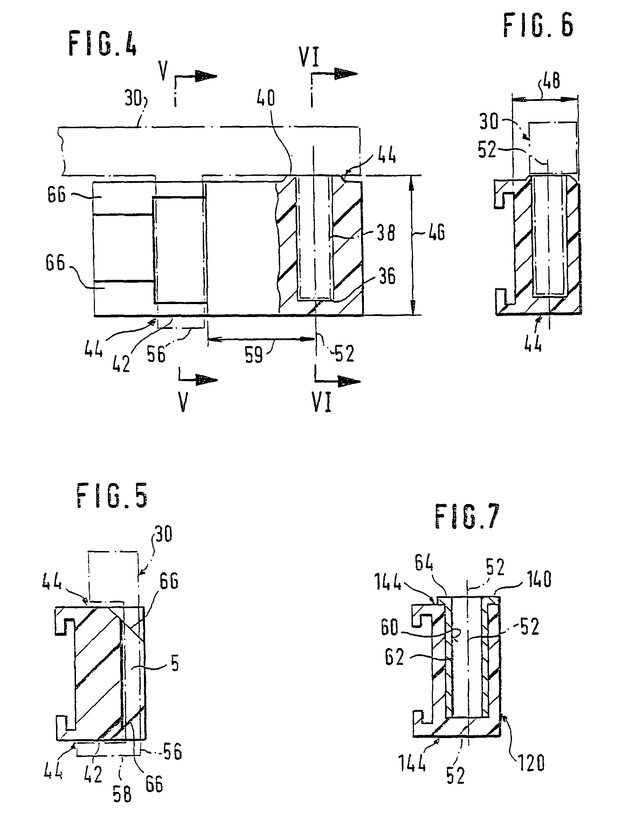

In der Zeichnung zeigen: Figur 1 eine Seitenansicht eines erfindungsgemäßen Wischblatts, Figur 2 eine Draufsicht auf das Wischblatt gemäß Figur 1, mit strichpunktiert angedeutetem Wischerarm, Figur 3 eine isometrische, vergrößerte Darstellung einer in Figur 1 mit III bezeichneten Einzelheit, Figur 4 ein in Figur 3 gezeigtes Kupplungsteil in Draufsicht, teilweise geschnitten, Figur 5 einen Schnitt durch das Kupplungsteil entlang der Linie V-V in Figur 4, Figur 6 einen Schnitt durch das Kupplungsteil entlang der Linie VI-VI in Figur 4 und Figur 7 eine andere Ausführung der in Figur 6 dargestellten Ausbildung des Kupplungsteils.

### Beschreibung des Ausführungsbeispiels

In Figur 1 gezeigte Wischblatt 10 weist eine bandartig langgestrecktes, federelastisches Tragelement 12 auf (Figur 3), an dessen Unterseite 14 eine langgestreckte, gummielastische Wischleiste 16 längsachsenparallel befestigt ist. An der von der Windschutzscheibe 24 abgewandten Oberseite 18 des auch als Federschiene zu bezeichnenden Tragelements 12 ist in dessen Mittelabschnitt das wischblattseitige Kupplungsteil 20 einer Anschlußvorrichtung angeordnet, mit deren Hilfe das Wischblatt 10 gelenkig mit einem angetriebenen Wischerarm lösbar verbunden werden kann. Dazu ist der Wischerarm an seinem freien Ende mit einem wischerarmseitigen Teil der Anschlußvorrichtung versehen. Der Wischerarm und damit auch das Wischblatt 10 ist in Richtung des Pfeiles 22 zur wischenden Scheibe 24 (in Figur 1 strichpunktiert angedeutet) eines Kraftfahrzeugs belastet, deren zu wischende Oberfläche in Figur 1 mit der Bezugszahl 26 versehen worden ist. Da die Linie 26 die stärkste Krümmung der Scheibenoberfläche darstellen soll ist klar ersichtlich, daß die Krümmung des mit seinen beiden Enden an der Scheibe 24 anliegenden, noch unbelasteten Wischblatt 10 stärker ist als die maximale Scheibenkrümmung (Figur 1). Unter dem Anpressdruck (Pfeil 22) legt sich das Wischblatt 10 mit seiner Wischlippe 28 über deren gesamte Länge an der Scheibenoberfläche 26 an. Dabei baut sich im aus Metall gefertigten, federelastischen Tragelement 12 eine Spannung auf, welche für eine ordnungsgemäße Anlage der Wischleiste 16 beziehungsweise der Wischlippe 28 über deren gesamte Länge an der Scheibe sowie für eine gleichmäßige Verteilung des Anpressdrucks sorgt. Ein derartig konzipiertes Wischblatt baut erheblich niedriger als ein sogenanntes Tragbügelgestell-Wischblatt, das eingangs schon beschrieben worden ist. Die Vorteile eines Wischblatts, das anstelle eines Traggestells mit einer Federschiene 12 versehen ist, sind insbesondere in seiner Unempfindlichkeit gegen die Abhebebestrebungen zu sehen, welche bei höher bauenden Tragbügelgestell-Wischblättern unvermeidbar sind. Weil die in aller Regel sphärisch gekrümmte Scheibe nicht ein Abschnitt einer Kugeloberfläche darstellt, muß sich das Wischblatt 10 gegenüber dem Wischerarm 30 während seiner Wischbewegung ständig der jeweiligen Lage der Scheibenoberfläche anpassen können. Deshalb ist die Anschlußvorrichtung gleichzeitig als Gelenkverbindung zwischen Wischblatt 10 und Wischerarm 30 (in Figur 2 strichpunktiert dargestellt) ausgebildet.

Während des Wischbetriebs pendelt der Wischerarm 30 um eine Pendelachse 32 (Figur 2), so daß das Wischblatt 10 quer zu seiner Längserstreckung in Richtung eines in Figur 2 gezeigten Doppelpfeils 34 über die Scheibe 24 verschoben wird.

Im Folgenden soll auf die besondere Ausgestaltung des Wischblatts 10 näher eingegangen werden. Wie die Zeichnung zeigt, sitzt das wischblattseitige Kupplungsteil 20 im Mittelabschnitt des bandartig langgestreckten Tragelements 12 und zwar auf dessen von der Scheibe abgewandten oberen Bandfläche 18. An der anderen, unteren Bandfläche 14 ist die Wischleiste 16 angeordnet. Ungeachtet dessen, daß beim Ausführungsbeispiel das Tragelement 12 als einteiliges Federband dargestellt ist kann dieses im Bedarfsfall auch aus mehreren Einzel- oder Teilelementen aufgebaut sein. Das mit dem Tragelement 12 fest verbundene Kupplungsteil 20 ist nahe seinem einen Endbereich mit einer bei der Ausführungsform gemäß Figur 4 als Sackloch dargestellten Querbohrung 36 versehen, welche die wischblattseitige Gelenkhälfte eines Gelenks bildet, das eine Relativbewegung zwischen Wischerarm und Wischblatt in einer auf der Scheibe 24 stehenden Ebene zuläßt. Die Querbohrung 36 stellt also eine Lagerausnehmung dar, beispielsweise für einen seitlich am Wischerarm 30 angeordneten, strichpunktiert gezeichneten Gelenkbolzen 38 (Figur 4). Neben seiner Funktion als Lagerausnehmung für den Gelenkbolzen bildet die Querbohrung 36 auch das wischblattseitige Kupplungsmittel, über welches das Wischblatt 10 betriebssicher mit dem Wischerarm 30 verbunden werden kann.

Das Kupplungsteil 20 ist mit zwei sich in Längsrichtung des Wischblatts 10 erstreckenden, zur Scheibe stehend angeordneten Wangenbereiche 40 und 42 versehen, von denen jeweils ein Wangenbereich an einer der beiden Kupplungsteil-Längsseiten 44 ausgebildet ist. Dabei kommt dem in Wischrichtung (Doppelpfeil 34) gemessenen Abstand 46 zwischen den beiden Wangenbereichen 40 und 42 besondere Bedeutung zu, auf die später noch eingegangen wird. Ein Zweck der Wangenbereiche 40 und 42 ist darin zu sehen, daß sich das Wischblatt in der einen Wischrichtung mit seinem Wangenbereich 40 an einer Stützfläche des Wischerarms 30 abstützen kann, während der andere Wangenbereich 42 diese Funktion bei der Gegenbewegung des Wischblatts übernimmt. Um im Moment der Wischrichtungsumkehr eine möglichst geringe Kippbewegung des Wischblatts um seine Längsachse sicherzustellen, ist ein möglichst großer Abstand 46 anzustreben. Andererseits stört ein zu großer Abstand 46 das optische Erscheinungsbild des Wischblatts beziehungsweise die Harmonie in der Frontansicht des mit einem solchen Wischblatt ausgestatteten Kraftfahrzeuges. In Abwägung dieser beiden Kriterien hat es sich als vorteilhaft erwiesen, wenn der Abstand 46 zwischen den beiden Wangenbereichen zwischen 16 und 25 mm liegt. Weiter hat es sich gezeigt, daß das Verhältnis zwischen der Länge des Wischblatts und dem Abstand 46 zwischen den beiden Wangenbereichen ebenfalls aus Gründen der Optik möglichst im Bereich zwischen den Werten 1:22 und 1:33 liegen soll. Für ein breites Spektrum der angebotenen Wischblätter ergibt sich somit ein Abstand 46 zwischen den beiden Wangenbereichen 40 und 42, der zwischen 20 und 23 mm liegt. Für einen besonderen speziellen Anwendungsfall hat sich ein Abstand 46 von 22mm als außerordentlich vorteilhaft erwiesen.

Wie die Figuren 3 und 4 zeigen, ist die als Lagerausnehmung zu bezeichnende Sack-Querbohrung 36 im Kupplungsteil 20 nahe dem einen Ende des Kupplungsteil angeordnet. In diesem Bereich (Figur 6) ist die Dicke 48 des Kupplungsteils, von der Oberseite 18 des Kupplungsteils 20 aus gemessen, größer als in einem anderen Bereich des Kupplungsteils. Insbesondere aus Figur 3 ist ersichtlich, daß das Kupplungsteil 20 über einen Längsabschnitt 50 erheblich niedriger ist als im Bereich der Lagerausnehmung 36. Dieser Längsabschnitt 50 ist durch die Breite einer Quernut 54 gebildet, welche zu der vom Tragelement 12 abgewandten Seite des Kupplungsteils offen ist. Beim Ausführungsbeispiel ist es von besonderer Bedeutung, daß der eine 40 der beiden Wangenbereiche 40, 42 als ein in Richtung der Gelenkachse 52 vorspringendes Lagerauge ausgebildet ist, welches die Mündung der Querbohrung 36 umgibt. Der andere Wangenbereich 42 befindet sich in dem Bereich der Kupplungsteil-Längsseite 44 an welchem die Quernut 54 mündet oder endet. Er befindet sich somit auch dort wo das Kupplungsteil 20 eine geringere Dicke hat als an dem mit der Lagerausnehmung 36 versehenen Endbereich des Kupplungsteils 20. Die in Längsrichtung des Wischblatts gemessene Breite 50 der Quernut 54 beträgt beim Ausführungsbeispiel 9mm. Dadurch ergibt sich ein genügend breiter Freiraum für den Übergang eines mit dem Wischerarm 30 verbundenen, zu diesem gehörenden Sicherungshaken 56, der mit einem zur Scheibe abgekröpften Schenkel 58 das Kupplungsteil 20 und damit das Wischblatt 10 im Bereich der Quernut 54 übergreift und mit seinem Schenkel 58 mit dem Wangenbereich 42 zusammenwirkt, wenn das Wischblatt seine Arbeitsbewegung ausführt. Eine Breite von 9mm für die Quernut 54 ermöglicht eine entsprechend stabile Ausbildung des Sicherungshakens 56, der das Wischblatt in der Quernut 54 überquert ohne daß deshalb die Bauhöhe des Wischblatts 10 ungünstig beeinflußt wird. Das Kupplungsteil 20 gemäß den Figuren 3 bis 6 ist aus einem Kunststoff hergestellt, wobei die Querbohrung 36 direkt in das blockartige Kupplungsteil eingeformt und das Lagerauge an das Kupplungsteil angeformt sind ist.

Zur Optimierung der Gleiteigenschaften zwischen dem wischerarmseitigen Gelenkbolzen 38 und der als Gleitpartner wirkenden Wand der Querbohrung 36 kann es von Vorteil sein, wenn die Querbohrung 36 durch die Zentralbohrung 60 einer im Kupplungsteil 120 sitzenden Führungs- oder Gleitbuchse 62 gebildet ist. Dabei kann aus dem gleichen Grund die Führungsbuchse 62 mit einem Ringbund 64 versehen sein, der aus der dem Wischerarm 30 zugewandten Kupplungsteil-Längsseite 144 vorspringt und somit an Stelle des Lagerauges einen dem Wangenbereich 40 der schon beschriebenen Ausführungsform entsprechenden Wangenbereich 140 bildet. Dies gilt natürlich auch dann, wenn an Stelle des Ringbundes eine separate Ringscheibe angeordnet ist. Eine derartige Ausführungsform ist in Figur 7 dargestellt.

Dadurch, daß die Lager- oder Querbohrung 36 mit einem gewissen Abstand 59 von der Quernut 54 angeordnet ist (Figur 4), ergibt sich natürlich auch ein entsprechender Abstand 59 zwischen den beiden Wangenbereichen 40 und 42 beziehungsweise 140 und 42, wodurch eine weitere Verbesserung der Wischblattführung erreicht wird.

Aus Figur 2 ist entnehmbar, daß in Längsrichtung des Wischblatts 10 gemessen, der Abstand 82 der Quer- oder Lagerbohrung 36 beziehungsweise der Gelenkachse 52 über die Quernut 54 bis zum einen Ende des Wischblatts 10 größer ist als der Abstand 84 von der Gelenkachse 52 zum anderen Ende des Wischblatts. Durch den so festgelegten, verschobenen Schwerpunkt zum einen Wischblattende hin ergibt sich bei von der Scheibe 24 weggeklappten Wischblatt 10 ein Moment, welches das Wischblatt um die Gelenkachse 52 in Richtung des Pfeiles 86 dreht, so daß dieses mit seinen Wangenbereichen 40, 42 des Kupplungsteils 20 stets zwischen den Sicherungsmitteln 30, 56 des Wischerarms 30 verbleibt und dadurch gegen unbeabsichtigtes Lösen vom Wischerarm gesichert ist.

Durch die zwingend vorgegebene Betriebslage des Wischblatts 10 zwischen den Sicherungsmitteln des Wischerarms wird eine Fehlmontage sicher vermieden, da widrigenfalls die visuell klar erkennbare Betriebsposition zwischen Wischerarm und Wischblatt nicht erreicht werden kann.

Bei bestimmten Anwendungsfällen kann das Wischblatt 10 an der Oberseite 18 des Tragelements 12 mit einer an sich bekannten, sogenannten Windabweisleiste versehen werden. Bei solchen Anwendungsfällen kann es von Vorteil sein, wenn wenigstens die eine der beiden Kupplungsteil-Längsseiten 44 beziehungsweise 144 über einen Abschnitt mit einer Anschrägung 66 versehen ist, welche in diesem Teilbereich des Wischblatts die Funktion der Windabweisleiste übernimmt. Wenn beide Kupplungsteil-Längsseiten mit einer solchen Anschrägung 66 ausgestattet sind kann sich darüber hinaus noch eine Montageerleichterung ergeben, wenn das Wischblatt 10mit dem Wischerarm verbunden werden soll.

## Patentansprüche

1. Wischblatt zum Reinigen von Scheiben von Kraftfahrzeugen mit einer an der Scheibe (24) anlegbaren, langgestreckten, gummielastischen Wischleiste (16), die an der einen Bandfläche (14) eines bandartig langgestreckten, federelastischen Tragelements (12) längsachsenparallel angeordnet ist und an der anderen Bandfläche (18) des Tragelements ein mit dessen Mittelabschnitt verbundenes Kupplungsteil (20) sitzt, welches eine Gelenkhälfte aufweist deren Gelenkachse (52) quer zur Längserstreckung des Wischblatts (10) ausgerichtet ist, wobei sowohl diese Gelenkhälfte als auch die Kupplungsmittel des Wischblatts durch eine Lagerausnehmung (36) im Kupplungsteil (20) gebildet sind, wobei das Wischerarm-Kupplungsteil (20) zwei sich in Längsrichtung des Wischblatts (10) erstreckende, zur Scheibe (24) stehend angeordnete Wangenbereiche (40 und 42 beziehungsweise 64) hat, **dadurch gekennzeichnet, dass** jeweils ein Wangenbereich an einer der beiden Kupplungsteil-Längsseiten (44) als Führungs- oder Passfläche für jeweils eine Gegenfläche des Wischerarms ausgebildet ist und dass der Abstand (46) zwischen den beiden Wangenbereichen zwischen 16 mm und 25 mm beträgt.

2. Wischblatt nach Anspruch 1, **dadurch gekennzeichnet, dass** der Abstand (46) zwischen den beiden Wangenbereichen (40 und 42) zwischen 20 mm und 23 mm beträgt.

3. Wischblatt nach einem der Ansprüche 1 oder 2, **dadurch gekennzeichnet, dass** der Abstand (46) zwischen den beiden Wangenbereichen (40 und 42) 22mm beträgt.

4. Wischblatt nach Anspruch 1, **dadurch gekennzeichnet, dass** das Verhältnis zwischen der Länge des Wischblatts (10) und dem Abstand (46) zwischen den beiden Wangenbereichen (40 und 42) zwischen den Werten 1:22 und 1:33 liegt.

5. Wischblatt nach einem der Ansprüche 1 bis 4, **dadurch gekennzeichnet, dass** in Längsrichtung des Wischblatts (10) gesehen die Lagerausnehmung (36) nahe dem einen Ende des Kupplungsteils (20) angeordnet ist und dass die Dicke des Kupplungsteils (20) zwischen dem einen mit der Lagerausnehmung versehene Endbereich und dem anderen Ende des Kupplungsteils zumindest über einen Längsabschnitt (50) geringer ist als der die Lagerausnehmung aufweisende Endabschnitt des Kupplungsteils.

6. Wischvorrichtung nach einem der Ansprüche 1 bis 5, **dadurch gekennzeichnet, dass** in Längsrichtung des Wischblatts (10) gemessen, der Abstand (82) der Querbohrung (36) über die Quernut (54) bis hin zum einen Ende des Wischblatts (10) größer ist als zum anderen Ende des Wischblatts.

7. Wischblatt nach Anspruch 5 oder 6, **dadurch gekennzeichnet, dass** der Längsabschnitt durch eine Quernut (54) im Kupplungsteil (20) gebildet ist, welche zu der vom Tragelement (12) abgewandten Seite des Kupplungsteils (20) offen ist.

8. Wischblatt nach einem der Ansprüche 1 bis 7, **dadurch gekennzeichnet, dass** der eine (40) der beiden Wangenbereiche (40,42) die Mündung der Lagerausnehmung (36) umgibt und dass der andere Wangenbereich (42) an dem Abschnitt des Kupplungsteils angeordnet ist, welcher eine geringere Dicke hat als der mit der Lagerausnehmung (36) versehene Endbereich des Kupplungsteils.

9. Wischblatt nach Anspruch 8, **dadurch gekennzeichnet, dass** die Lagerausnehmung (36) als Sackbohrung ausgebildet ist.

10. Wischblatt nach einem Ansprüche 7 bis 9 **dadurch gekennzeichnet, dass** die Breite (54) der Quernut (50) 8 mm bis 10 mm, vorzugsweise 9 mm beträgt.

11. Wischblatt nach einem der Ansprüche 1 bis 10, **dadurch gekennzeichnet, dass** wenigstens eine der beiden Kupplungsteil-Längsseiten (44) über einen Abschnitt mit einer Anschrägung (66) versehen ist.

12. Wischblatt nach einem der Ansprüche 1 bis 11, **dadurch gekennzeichnet, dass** das Kupplungsteil (20) aus einem Kunststoff hergestellt ist

13. Wischblatt nach Anspruch 12, **dadurch gekennzeichnet, dass** die Lagerausnehmung durch die Bohrung (60) einer im Kupplungsteil sitzenden Führungsbuchse (62) gebildet ist.

## Claims

1. Wiper blade for cleaning the glass surfaces of motor vehicles, having an elongate, rubber-elastic wiper strip (16) which can be placed against the glass surface (24) and is arranged parallel to the longitudinal axis on the one band surface (14) of a spring-elastic supporting element (12), which is elongate in the manner of a band, and a coupling part (20) sits on the other band surface (18) of the supporting element, which coupling part is connected to the central section of the said supporting element and has a hinge half, the hinge axis (52) of which is oriented transversely with respect to the longitudinal extent of the wiper blade (10), both this hinge half and the coupling means of the wiper blade being formed by a bearing recess (36) in the coupling part (20), the wiper-arm coupling part (20) having two cheek regions (40 and 42 or 64) which extend in the longitudinal direction of the wiper blade (10) and are arranged perpendicularly to the glass surface (24), **characterized in that** one cheek region in each case on one of the two coupling-part longitudinal sides (44) is designed as a guiding or mating surface for a respective opposite surface of the wiper arm, and **in that** the distance (46) between the two cheek regions is between 16 mm and 25 mm.

2. Wiper blade according to Claim 1, **characterized in that** the distance (46) between the two cheek regions (40 and 42) is between 20 mm and 23 mm.

3. Wiper blade according to either of Claims 1 and 2, **characterized in that** the distance (46) between the two cheek regions (40 and 42) is 22 mm.

4. Wiper blade according to Claim 1, **characterized in that** the ratio between the length of the wiper blade (10) and the distance (46) between the two cheek regions (40 and 42) is between the values of 1:22 and 1:33.

5. Wiper blade according to one of Claims 1 to 4, **characterized in that**, as seen in the longitudinal direction of the wiper blade (10), the bearing recess (36) is arranged close to the one end of the coupling part (20), and **in that** the thickness of the coupling part (20) between the one end region provided with the bearing recess and the other end of the coupling part is smaller at least over a longitudinal section (50) than that end section of the coupling part which has the bearing recess.

6. Wiper blade according to one of Claims 1 to 5, **characterized in that**, as measured in the longitudinal direction of the wiper blade (10), the distance (82) of the transverse hole (36) above the transverse groove (54) as far as the one end of the wiper blade (10) is greater than to the other end of the wiper blade.

7. Wiper blade according to Claim 5 or 6, **characterized in that** the longitudinal section is formed in the coupling part (20) by a transverse groove (54) which is open to that side of the coupling part (20) which faces away from the supporting element (12).

8. Wiper blade according to one of Claims 1 to 7, **characterized in that** the one (40) of the two cheek regions (40, 42) surrounds the mouth of the bearing recess (36) and **in that** the other cheek region (42) is arranged on that section of the coupling part which has a smaller thickness than that end region of the coupling part which is provided with the bearing recess (36).

9. Wiper blade according to Claim 8, **characterized in that** the bearing recess (36) is designed as a blind hole.

10. Wiper blade according to one of Claims 7 to 9, **characterized in that** the width (54) of the transverse groove (50) is 8 mm to 10 mm, preferably 9 mm.

11. Wiper blade according to one of Claims 1 to 10, **characterized in that** at least one of the two coupling-part longitudinal sides (44) is provided with a bevel (66) over one section.

12. Wiper blade according to one of Claims 1 to 11, **characterized in that** the coupling part (20) is produced from a plastic.

13. Wiper blade according to Claim 12, **characterized in that** the bearing recess is formed by the hole (60) of a guide bushing (62) sitting in the coupling part.

## Revendications

1. Balai d'essuie-glace pour nettoyer des vitres de véhicule automobile, comportant une lame d'essuyage (16) applicable contre la vitre (24), allongée, ayant l'élasticité du caoutchouc, et montée sur une face (14) d'un élément de support (12) en forme de ruban allongé, ayant l'élasticité d'un ressort, parallèlement à son axe longitudinal, alors que l'autre face de ruban (18) de l'élément de support porte une pièce d'accouplement (20) reliée à son segment médian, cette pièce ayant une moitié d'articulation dont l'axe d'articulation (52) est transversal à l'extension longitudinale du balai d'essuie-glace (10),
à la fois cette moitié d'articulation et aussi le moyen d'accouplement du balai d'essuie-glace étant formés par une cavité (36) constituant un palier dans la pièce d'accouplement (20),
la pièce d'accouplement (20) du bras d'essuie-glace ayant deux joues (40, 42 ou 64) s'étendant dans la direction longitudinale du balai d'essuie-glace (10), en étant disposée debout par rapport à la vitre (24),
**caractérisé en ce que**
chaque fois une zone de joue est réalisée sur l'un des deux côtés longitudinaux (44) de la pièce d'accouplement comme surface de guidage ou d'ajustement pour une surface antagoniste du bras d'essuie-glace, et la distance (46) entre les deux joues est comprise entre 16 mm et 25 mm.

2. Balai d'essuie-glace selon la revendication 1,
**caractérisé en ce que**
la distance (46) entre les deux joues (40, 42) est comprise entre 20 et 23 mm.

3. Balai d'essuie-glace selon l'une des revendications 1 ou 2,
**caractérisé en ce que**
la distance (46) entre les deux joues (40, 42) est égale à 22 mm.

4. Balai d'essuie-glace selon la revendication 1,
**caractérisé en ce que**
le rapport entre la longueur du balai (10) et la distance (46) entre les deux joues (40, 42) est comprise entre 1/22 et 1/33.

5. Balai d'essuie-glace selon l'une des revendications 1 à 4,
**caractérisé en ce que**
la cavité de palier (36) vue dans la direction longitudinale du balai (10) se trouve à proximité d'une extrémité de la pièce d'accouplement (20), et l'épaisseur de la pièce d'accouplement (20) entre la zone d'extrémité munie de la cavité de palier et l'autre extrémité de la pièce d'accouplement au moins sur un segment longitudinal (50) est inférieure au segment d'extrémité de la pièce d'accouplement ayant la cavité de palier.

6. Balai d'essuie-glace selon l'une des revendications 1 à 5,
**caractérisé en ce que**
mesurée dans la direction longitudinale du balai d'essuie-glace (10), la distance (82) du perçage transversal (36) suivant la rainure transversale (54) jusqu'à une extrémité du balai (10) est supérieure à celle vers l'autre extrémité du balai d'essuie-glace.

7. Balai d'essuie-glace selon la revendication 5 ou 6,
**caractérisé en ce que**
le segment longitudinal est formé par une rainure transversale (54) dans la pièce d'accouplement (20) ouverte vers le côté de la pièce d'accouplement (20) à l'opposé de celui de l'élément de support (12).

8. Balai d'essuie-glace selon l'une des revendications 1 à 7,
**caractérisé en ce que**
l'une (40) des deux joues (40, 42) entoure l'embouchure de la cavité de palier (36) et l'autre joue (42) se trouve au niveau du segment de la pièce d'accouplement qui a une épaisseur moindre que celle de la zone d'extrémité de la pièce d'accouplement munie de la cavité de palier (36).

9. Balai d'essuie-glace selon la revendication 8,
**caractérisé en ce que**
la cavité de palier (36) est un perçage borgne.

10. Balai d'essuie-glace selon l'une des revendications 7 à 9,
**caractérisé en ce que**
la largeur (54) de la rainure transversale (50) est comprise entre 8 mm et 10 mm et est de préférence égale à 9 mm.

11. Balai d'essuie-glace selon l'une des revendications 1 à 10,
**caractérisé en ce qu'**
au moins l'un des deux grands côtés (44) de la pièce d'accouplement est muni d'une rampe (66) sur un segment.

12. Balai d'essuie-glace selon l'une des revendications 1 à 11,
**caractérisé en ce que**
la pièce d'accouplement (2) est une pièce en matière plastique.

13. Balai d'essuie-glace selon la revendication 12,
**caractérisé en ce que**
la cavité de palier est réalisée par un perçage (60) d'une douille de guidage (62) logée dans la pièce d'accouplement.
